# EUROPEAN PATENT APPLICATION

(11) **EP 2 241 475 A1**
(43) Date of publication of application: **20.10.2010**
(21) Application number: 09461507.7
(22) Date of filing: 14.04.2009
(51) Int. Cl.: B60N 2/26

(54) **A seating portion of a car seat for children and a method for manufacturing thereof**

(71) Applicant: Anecia Sp. z o.o., 03-928 Warszawa (PL)
(72) Inventor: Liberkowski, Janusz, Los Gatos, CA 95032 (US)
(74) Representative: Pawlowski, Adam

(57) **Abstract**

A seating portion of a car seat for children comprises a semi-open first portion (1) for accommodating an occupant, having a first peripheral edge (11) defining the boundary of a back support area (12) and a seat support area (13) for the occupant, the first peripheral edge (11) comprising a first coupling means (14), a second portion (2) having a second peripheral edge (21) corresponding with the first peripheral edge (11), the second peripheral edge (21) comprising a second coupling means (24) complementary with the first coupling means (14), the first portion (1) being coupled with the second portion (2) by the first coupling means (14) and the second coupling means (24), an elastic membrane suspension system (3) extending over the back support area (12) and the seat support area (13) and secured between the first peripheral edge (11) and the second peripheral edge (21).

## Description

### DESCRIPTION

The invention relates to car seats for children, in particular to a seating portion of a car seat for children and a method for manufacturing thereof.

Conventional car seats for children have a seating portion which comprises molded plastic shell which is covered with foam padding. This padding provides minimal comfort and no protection to the occupant from injury during car crash. The padding is usually covered by a material which protects the padding from wear and provides aesthetic appearance of the car seat.

Furthermore, conventional car seats for children do not have any suspension system that provides increased user comfort and shock absorbing properties.

The aim of the invention is to provide a seating portion of a car seat for children that provides good shock absorption properties, increased user comfort, increased reliability, increased manufacturability, and reduced cost.

The object of the invention is a seating portion of a car seat for children, comprising a semi-open first portion for accommodating an occupant, having a first peripheral edge defining the boundary of a back support area and a seat support area for the occupant, the first peripheral edge comprising a first coupling means, a second portion having a second peripheral edge corresponding with the first peripheral edge, the second peripheral edge comprising a second coupling means complementary with the first coupling means, the first portion being coupled with the second portion by the first coupling means and the second coupling means, an elastic membrane suspension system extending over the back support area and the seat support area and secured between the first peripheral edge and the second peripheral edge.

Preferably, the first coupling means continuously extend along the first peripheral edge and/or the second coupling means continuously extend along the second peripheral edge. Preferably, the first coupling means and the second coupling means are of a snap-type. Preferably, the elastic membrane suspension system is secured by being located between the first coupling means and the second coupling means.

Preferably, the elastic membrane suspension system is made of thermoplastic elastomer. Preferably, the first portion and/or the second portion is made of polypropylene.

The object of the invention is also a car seat for children comprising the seating portion defined above.

Another object of the invention is a method for manufacturing the seating portion of a car seat for children defined above, comprising the steps of providing a support having a positioning means, placing the second portion on the support within the positioning means, such that the second peripheral edge is faced upwards, placing a sheet of an elastic membrane suspension system over the second portion, placing a holder over the sheet so as to secure the sheet in position, placing the first portion over the sheet and the second portion with the first peripheral edge facing downwards, so as to align the first coupling means correspondingly with the second coupling means, pressing the first portion against the second portion so as to engage the first coupling means with the second coupling means.

Preferably, when placing the holder over the sheet, the sheet is stretched over the second portion. Preferably, the step of pressing the first portion against the second portion is performed by a hydraulic press acting on the first portion via a pressing member. Preferably, the method further comprises the step of cutting off the loose part of the sheet after the first portion is pressed against the second portion.

The invention will now be described by way of example and with reference to the accompanying drawings in which:
Fig. 1 shows a perspective view of the seating portion of a car seat for children according to the invention;
Fig. 2A-2C show a first portion of the seating portion;
Fig. 3A-3B show a second portion of the seating portion;
Fig. 4 shows a cross-section of the seating portion;
Fig. 5A-5F show individual steps of a method for manufacturing the seating portion of a car seat for children according to the invention.

The embodiments presented in the drawings are intended only for illustrative purpose and do not limit the scope of the invention, as defined by the accompanying claims.

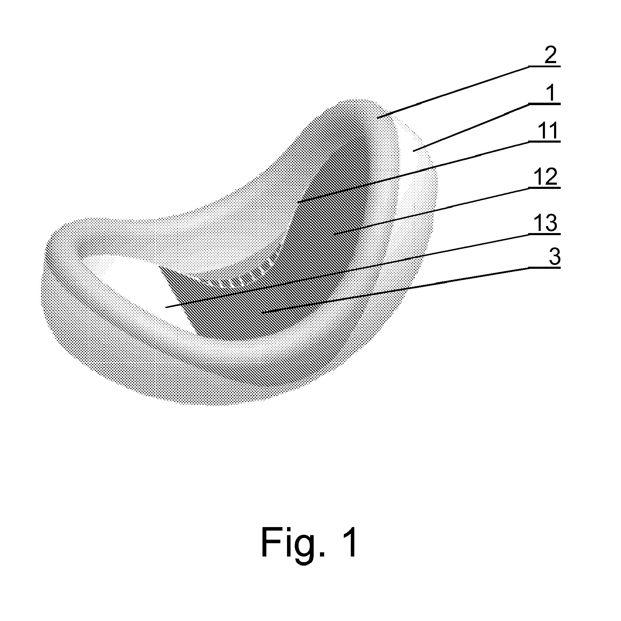

The seating portion of a car seat for children according for the invention is shown in a perspective view in Fig. 1. The seating portion comprises a semi-open first portion 1 for accommodating an occupant, i.e. a child, which has a first peripheral edge 11 defining the boundary of a back support area 12 and a seat support area 13 for the occupant. The back support area 12 is the area on which the occupant may place the back and possibly the head. The seat support area is the area on which the occupant may place the backside and possibly the legs and feet. The seating portion further comprises a second portion 2, which is coupled with the first portion 1. An elastic membrane suspension system 3 extends over the back support area 12 and the seat support area 13, as shown in details in the following drawings.

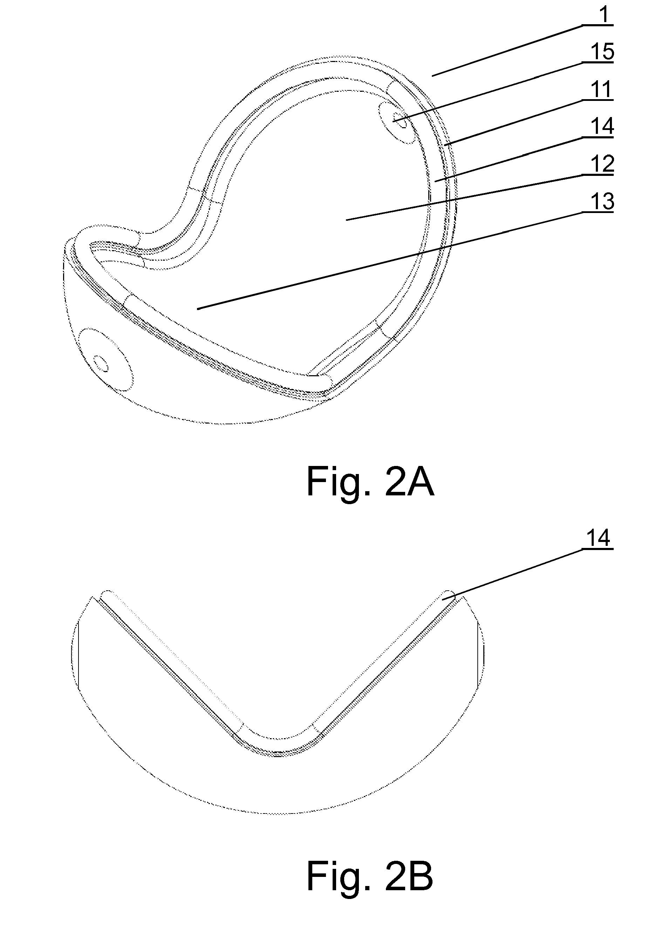

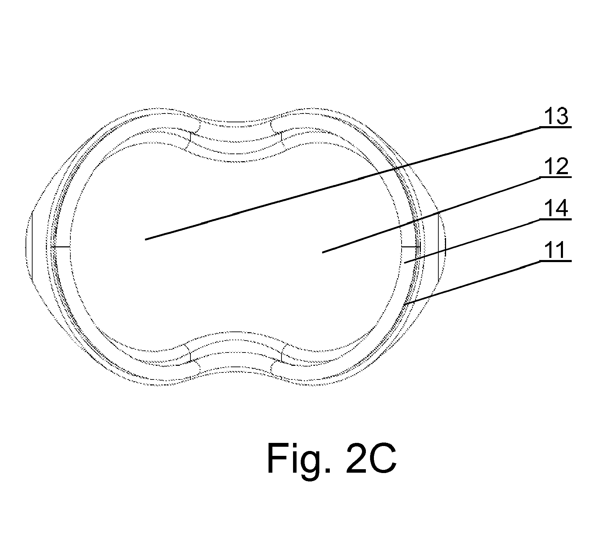

Fig. 2A shows a perspective view of the first portion 1, Fig. 2B shows a side view of the first portion 1 and Fig. 2C shows a top view of the first portion 1. The first portion 1 is semi-open, i.e. it is open from one side and at least partially closed from another sides, which may be solid, perforated or have a grating surface. The first portion 1 may have a semi-spherical shape, semi-egg shape or any other shape applicable to be assembled into the base portion of the car seat. The first portion 1 has a first peripheral edge 11 which surrounds its open side and defines the boundary of the back support area 12 and the seat support area 13. The volume of the first portion 1 between the open side and the closed sides may be filled with a cushioning material, such as a memory foam in order to comfortably position the occupant within the seat and protect the occupant from hitting the closed sides of the first portion 1. The first peripheral edge comprises a first coupling means 14 for engaging with a second coupling means 24 of the second portion 2. The first portion 1 may further have means 15 for coupling the seating portion with the rest of the car seat, for example with the base of the car seat.

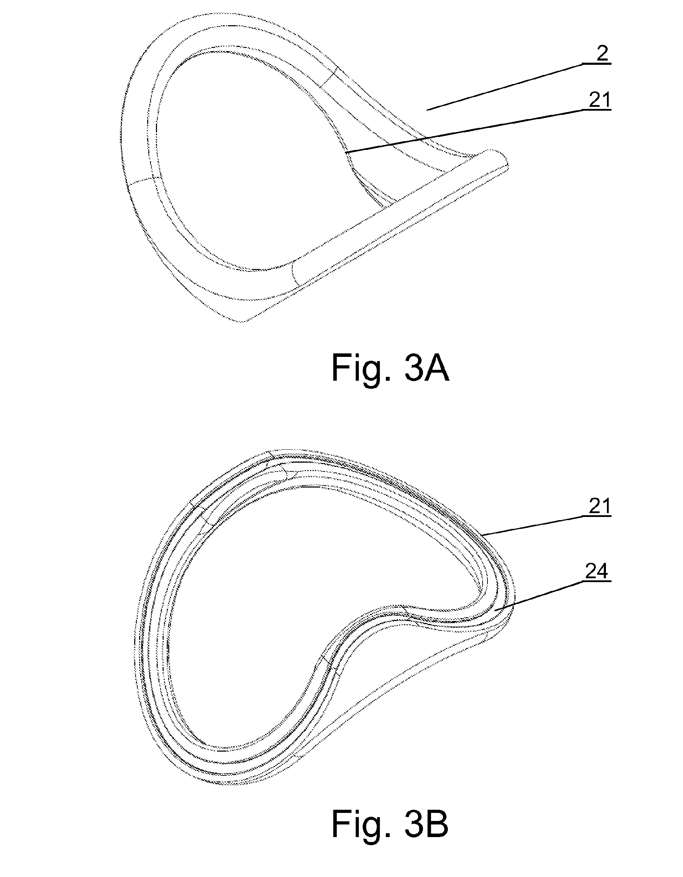

Fig. 3A shows a perspective view of the second portion 2 from the top side and Fig. 3B shows a perspective view of the second portion 2 from the bottom side. The second portion 2 has a second peripheral edge 21 corresponding with the first peripheral edge 11 of the first portion 1 and which comprises second coupling means 24 complementary with the first coupling means 14. Therefore, when the second portion 2 is placed over the first portion 1, the portions may be coupled via the coupling means 14 and 24. The second portion 2 shown herein has a simple form of a frame, but it may have more elaborate shapes and comprise additional elements such as handles, occupant coverings etc.

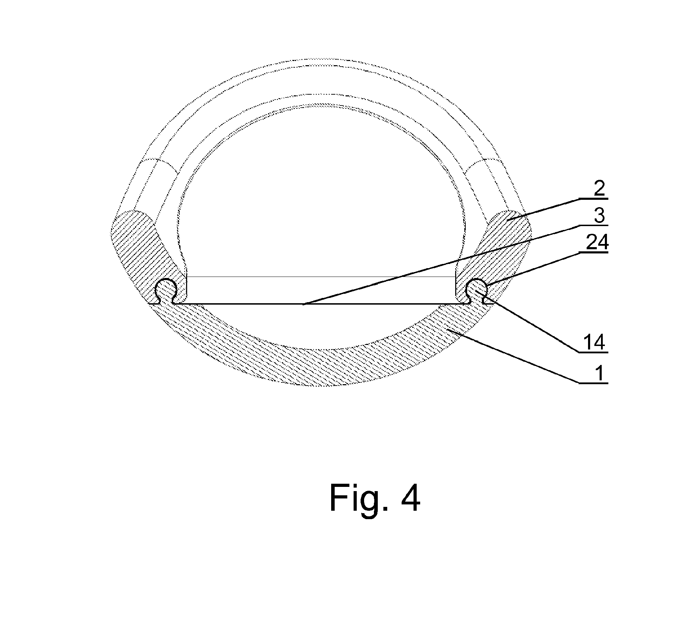

Fig. 4 shows a cross-section of the seating portion. The first portion 1 is coupled with the second portion 2 by means of the first coupling means 14 and the second coupling means 24. The coupling means 14, 24 may be of a snap-type, for example the first coupling means 14 may form a stud and the second coupling means 24 may form a socket of a snap fastener. An elastic membrane suspension system 3, which extends over the back support area 12 and the seat support area 13 is secured between the first peripheral edge 11 and the second peripheral edge 21, and preferably between the first coupling means 14 and the second coupling means 24.

As shown in Fig. 2A-2C and 3A-3B, the first coupling means 14 and/or the second coupling means 24 may extend continuously along the corresponding peripheral edges 11, 21. In such a case the coupling between the first portion 1 and the second portion 2, as well as the fixing of the elastic membrane suspension system 3 is particularly secure.

Due to the fact that the membrane 3 is elastic, it can be conveniently secured between the first and second portions 1, 2 of the seating portion. The elastic membrane suspension system 3 provides primary level shock protection to the occupant. The elastic membrane suspension system 3 may be made of a thermoplastic elastomer, such as Hytrel ® manufactured by DuPont ® company. Use of this, or similar thermoplastic elastomer has the advantage of being ideal for parts requiring excellent flex fatigue and broad use temperature. It resists tearing, flex-cut growth, creep and abrasion. It offers strength and stiffness plus outstanding toughness.

The top portion 1 and/or the bottom portion 2 may be made of polypropylene. This allows for their convenient manufacture in various shapes.

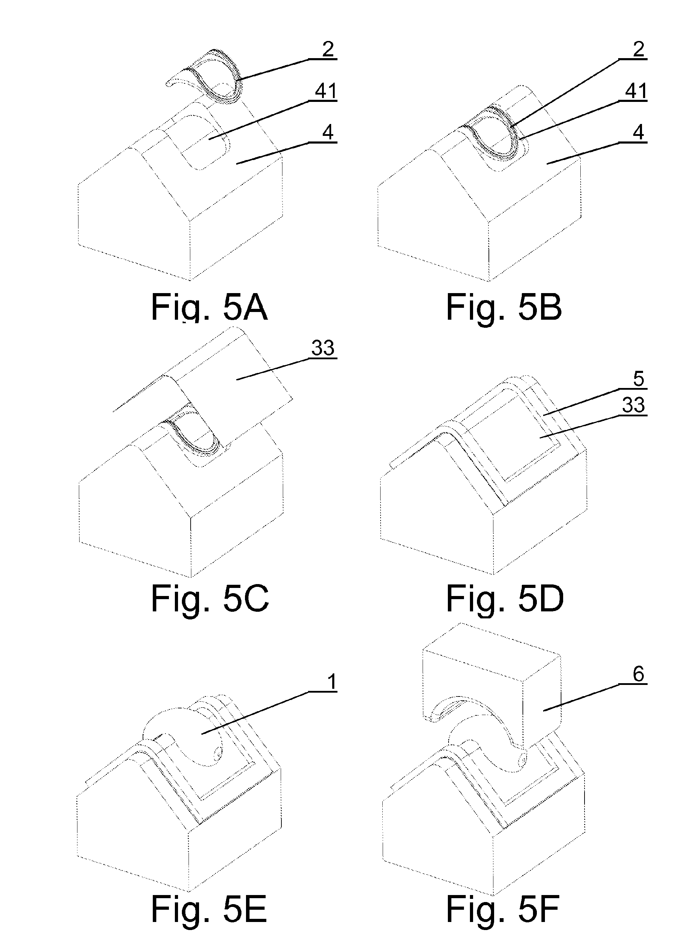

Figs. 5A to 5F show individual steps of a method for manufacturing the seating portion of a car seat for children according to the invention. As shown in Fig. 5A, a support is provided, the support having a positioning means 41. The support may have a steel structure. As shown in Fig. 5B, the second portion 2 is placed on the support 4 within the positioning means 41, such that the second peripheral edge 21 is faced upwards. The positioning means 41 may have a profile corresponding with the outer profile of the second portion 2, such as to provide appropriate support from all sides. Next, as shown in Fig. 5C, a sheet 33 of an elastic membrane suspension system is placed over the second portion 2. Then, as shown in Fig. 5D, a holder 5 is placed over the sheet 33 so as to secure the sheet 33 in position over the second portion 2. In this step, the sheet 33 may be stretched over the second portion, for example by stretching the boundary of the holder 5 or by configuring the positioning means such that the top surface of the second portion 2 extends over the top surface of the support 4. Next, as shown in Fig. 5E, the first portion is placed over the sheet 33 and the second portion 2 with the first peripheral edge 11 facing downwards, so as to align the first coupling means 14 correspondingly with the second coupling means 24. Then, as shown in Fig. 5F, the first portion 1 is pressed against the second portion 2 so as to engage the first coupling means 14 with the second coupling means 24. Pressing of the first portion 1 against the second portion 2 may be performed manually or preferably by a hydraulic press acting on the first portion 1 via a pressing member 6. The profile of the pressing member 6 may be adapted to match the outer profile of the first portion 1 in order to achieve optimal force distribution over the whole surface of the first portion 1. Use of the hydraulic press may be preferable in case of snap-type first and second coupling means 14, 24, which require high snapping weight, preferably in the order of several tons. Such high snapping force ensures secure connection of the first portion 1 and the second portion 2, as well as secure fixing of the elastic membrane suspension system 3 between the first peripheral edge 11 and the second peripheral edge 21. Preferably, at the end of the process the loose part of the sheet of the elastic membrane suspension system, i.e. the part outside the first and second portion, is cut off to facilitate further steps of handling the seating portion, for example attaching the seating portion to other portions of the car seat.

The method for manufacturing the seating portion of a car seat according to the invention is particularly convenient, as the back support area 12 and the seat support area 13 are part of the same elements and are covered by the elastic membrane suspension system 3 in a single step.

## Claims

1. A seating portion of a car seat for children, comprising:
- a semi-open first portion (1) for accommodating an occupant, having a first peripheral edge (11) defining the boundary of a back support area (12) and a seat support area (13) for the occupant, the first peripheral edge (11) comprising a first coupling means (14),
- a second portion (2) having a second peripheral edge (21) corresponding with the first peripheral edge (11), the second peripheral edge (21) comprising a second coupling means (24) complementary with the first coupling means (14),
- the first portion (1) being coupled with the second portion (2) by the first coupling means (14) and the second coupling means (24),
- a shock-absorbing elastic membrane suspension system (3), extending over the back support area (12) and the seat support area (13) and secured between the first peripheral edge (11) and the second peripheral edge (21).

2. The seating portion of a car seat for children according to claim 1, **characterized in that** the first coupling means (14) continuously extend along the first peripheral edge (11).

3. The seating portion of a car seat for children according to claim 1 or 2, **characterized in that** the second coupling means (24) continuously extend along the second peripheral edge (21).

4. The seating portion of a car seat for children according to any of claims 1 to 3, **characterized in that** the first coupling means (14) and the second coupling means (24) are of a snap-type.

5. The seating portion of a car seat for children according to claim 4, **characterized in that** the elastic membrane suspension system (3) is secured by being located between the first coupling means (14) and the second coupling means (14).

6. The seating portion of a car seat for children according to any previous claim, **characterized in that** the elastic membrane suspension system (3) is made of thermoplastic elastomer.

7. The seating portion of a car seat for children according to any previous claim, **characterized in that** the second portion (2) is made of polypropylene.

8. The seating portion of a car seat for children according to any previous claim, **characterized in that** the first portion (1) is made of polypropylene.

9. A car seat for children comprising the seating portion according to any of claims 1-8.

10. A method for manufacturing the seating portion of a car seat for children according to any of claims 1-8, comprising the steps of:
- providing a support (4) having a positioning means (41)
- placing the second portion (2) on the support (4) within the positioning means (41), such that the second peripheral edge (21) is faced upwards,
- placing a sheet (33) of an elastic membrane suspension system over the second portion (2),
- placing a holder (5) over the sheet (33) so as to secure the sheet (33) in position,
- placing the first portion (1) over the sheet (33) and the second portion (2) with the first peripheral edge (11) facing downwards, so as to align the first coupling means (14) correspondingly with the second coupling means (24),
- pressing the first portion (1) against the second portion (2) so as to engage the first coupling means (14) with the second coupling means (24).

11. The method according to claim 10, **characterized in that** when placing the holder (5) over the sheet (33), the sheet (33) is stretched over the second portion (2).

12. The method according to claim 10 or 11, **characterized in that** the step of pressing the first portion (1) against the second portion (2) is performed by a hydraulic press acting on the first portion (1) via a pressing member (6).

13. The method according to any of claims 10 to 12, further comprising the step of cutting off the loose part of the sheet (33) after the first portion (1) is pressed against the second portion (2).
